# NEUE EUROPÄISCHE PATENTSCHRIFT

(11) **EP 0 873 675 B2**
(45) Veröffentlichungstag und Bekanntmachung des Hinweises auf die Entscheidung über den Einspruch: **08.02.2006**
(45) Hinweis auf die Patenterteilung: 02.07.2003
(21) Anmeldenummer: 98106681.4
(22) Anmeldetag: 11.04.1998
(51) Int. Cl.: A01C 7/08, A01C 15/04

(54) **Pneumatische Drillmaschine oder Sämaschine mit Verteiler**
Pneumatic seeddrill or seeddrill with distributor
Semoir pneumatique ou semoir a distributeur

(30) Priorität: 24.04.1997 DE 19717212
(43) Veröffentlichungstag der Anmeldung: 28.10.1998
(73) Patentinhaber: Lemken GmbH & Co. KG, 46519 Alpen (DE)
(72) Erfinder: Siebers, Josef, 46509 Xanten (DE)
(74) Vertreter: Schulte, Jörg

(56) Entgegenhaltungen:
- EP-A- 0 168 906
- CA-A- 1 097 149
- DD-A- 121 588
- DD-A- 157 290
- DE-B- 1 287 350
- SU-A- 865 176

## Beschreibung

Die Erfindung betrifft eine pneumatische Drillmaschine oder Sämaschine mit zwischen Zuführrohr, Rohrbogen, Wirbelrohr und den zu verteilt angeordneten Säscharen führenden Schlauchleitungen oder Rohrleitungen vorgesehenem Verteiler, dessen Verteilergehäuse über sechs oder mehr Ausläufe verfügt.

Bei derartigen Drillmaschinen wird das Saatgut über entsprechende Fördereinrichtungen aus dem Saatgutbehälter über Zuführrohre, Verteiler und Schlauchleitungen pneumatisch zum Säschar oder Saatgutauslauf gefördert. Bei bekannten, aus der EP-A1-0 74B 580 bekannten Ausführungen dienen mehrere Verteiler als Versorgungseinrichtungen für die einzelnen Säschare. Diesen Verteilern sind sehr lange Wirbelrohre vorgeordnet, sodass die gesamte Einheit aufgrund der langen Wirbelrohre aber auch der Ausbildung der Verteiler sehr hoch baut. Die langen Wirbelrohre werden eingesetzt, um den Saatgutstrom zu verwirbeln und gleichmäßig dem Verteiler zuzuführen, über den sie dann über die Ausläufe in die einzelnen Schlauchleitungen und dann zu den Säscharen oder Saatgutausläufen gelangen. Die Verteiler in ihrer aufwendigen Bauweise und im Zusammenhang mit den langen Wirbelrohren haben den Nachteil, dass sie bei klappbaren Säschienen gegeneinander stoßen oder um diese Einklappung zu ermöglichen, versetzt zueinander angeordnet sein müssen. Zusätzlich sind die bekannten Verteiler sehr aufwendig aufgebaut und aufgrund des Prallprinzipes der Verteilung nicht saatgutschonend. Das Saatgut prallt praktisch in einem rechten Winkel auf die Verteilfläche, was zu Körnerbruch und dadurch zu einem erhöhten Saatguteinsatz führt. Aus der EP-A-0168906 ist dem Verteiler ein sehr langes, horizontal angeordnetes Wirbelrohr vorgeordnet. Weiter ist dem Verteiler ein Führungskörper mit einem kegeligen Körper und einer endseitigen Halbkugel zugeordnet. Durch die horizontale Anordnung und die Halbkugel ist eine einwandfreie Verteilung auf alle sechs oder mehr Ausläufe nicht möglich.

Die DE-C-12 87 350 und auch die CA-A-1097149 zeigen einen Verteiler mit hochbauendem senkrecht stehendemWirbelrohr. Die Nachteile eines langen Wirbelrohres wurden bereits bei der Beurteilung der EP-A1-0 748 580 angesprochen. Während bei der CA-A-1097149 eine Führung im Bereich der Ausläufe fehlt, weist das Oberteil des Verteilers nach der DE-C-1287350 eine Leitplatte auf, die bereits eine schonendere Umlenkung des Saatgutstromes bringen soll. Diese Art der Verteilung ist jedoch hinsichtlich der Verteilgenauigkeit nicht optimal. Insgesamt baut dieser Verteiler zu hoch und ist daher auch nicht universell einsetzbar.

Der Erfindung liegt daher die Aufgabe zugrunde, eine Drillmaschine mit kostengünstig herzustellenden und eine geringe Bauhöhe aufweisenden Verteilern zu schaffen, die bei hoher Verteilgenauigkeit einen kleinen Durchmesser und eine Vielzahl von Ausläufen aufweisen können.

Die Aufgabe wird gemäß der Erfindung dadurch gelöst, dass der Verteiler einen kegelförmigen Führungskörper aufweist, den mit einer an das Wirbelrohr heranreichenden Spitze ausgerüstet wird Teil eines Deckels ist, der mit einem Gewinde versehen ist, das mit dem Innengewinde des Verteilergehäuses korrespondierend ausgebildet ist wobei das Wirbelrohr vertikal angeordnet ist und sinusförmige, quer zur Fließrichtung verlaufende dicht aufeinander folgend angeordnete Wirbelsegmente aufweist.

Mit dieser Erfindung ist sichergestellt, dass der Verteiler selbst recht kostengünstig ist, eine geringe Bauhöhe aufweist und eine vorteilhafte Verteilgenauigkeit sicherstellt. Der auf der Innenseite des Deckels angeordnete Führungskörper bildet einen Verteilerkegel, dessen Spitze soweit an bzw. in das Wirbelrohr heranreicht, dass der Saatgutstrom frühzeitig und am Verteilerkegel entlang gleichmäßig in Richtung der Ausläufe geführt werden kann. Die einzelnen Saatgutkömer erreichen damit schonend geführt und gezielt verteilt die einzelnen Ausläufe und werden von dort aus über die Schlauchleitungen zu den Säscharen geführt. Diese gleichmäßige und kontinuierliche Führung führt zu einer optimalen Verteilgenauigkeit.

Damit ist eine einfache Wartung und ggf. auch eine Überprüfung der Wirkungsweise des einzelnen Verteilers möglich, der Deckel känn leicht aus dem Verteilergehäuse herausgedreht werden, so dass man dann in das Verteilergehäuse hineinsehen oder ggf. auch hineingelangen kann. Vorteilhaft ist dabei insbesondere, dass der Führungskörper am Deckel festgelegt werden kann, so dass er bei auftretendem Verschleiss oder bei notwendigem Austausch aus anderen Gründen leicht zu erreichen ist.

Eine einfache und kostengünstige Herstellung des Verteilers erreicht man dann, wenn der Deckel als Rotations- oder Drehteil und auch das Verteilergehäuse im Querschnitt rund und in der Höhe trichterförmig ausgebildet und vorzugsweise aus Kunststoff hergestellt sind. Der Kunststoff hat dabei auch korrosionsmäßige Vorteile, vor allen Dingen können diese Teile aber kostengünstig und sehr genau gefertigt werden.

Die Spitze des Verteilerkegels bzw. des kegelförmigen Führungskörper soll gemäß einer Weiterbildung der Erfindung in den Wirbelraum des Wirbelrohres hineinreichend ausgebildet sein, um auf diese Art und Weise bereits mit dem Ende des Verwirbelungsprozesses gleich mit der Verteilung des Saatgutes zu beginnen. Der Saatgutstrom wird somit bereits im Wirbelraum oder besser gesagt am Ende des Wirbelraumes durch den Verteilerkegel so aufgeteilt, dass eine gleichmäßige Verteilung in die einzelnen Ausläufen sichergestellt ist. Durch die schonende Umlenkung und frühzeitige Aufteilung des Saatgutstromes ist nicht nur eine schonende Behandlung dieses Saatgutes erreicht, sondern gleichzeitig auch die Möglichkeit gegeben, den gesamten Verteiler mit den zugeordneten Rohrleitungen kurzbauend auszubilden, sodass insbesondere bei einklappbaren Säschienen und Säeinheiten eine Störung beim Einklappen unmöglich wird.

Neben der geringen Bauhöhe wird der Verteiler insgesamt dadurch optimiert, dass er einen Außendurchmesser von nicht mehr als 18 cm bei 6 - 12 Ausläufen, vorzugsweise 15 cm aufweist. Überraschend ist, dass trotz des geringen Außendurchmessers eine hohe Verteilgenauigkeit erzielt wird. Dies wird insbesondere durch den kegelförmigen Ansatz bzw. den entsprechenden Führungskörper auf der Innenseite des Dekkels erreicht, der mit seiner Spitze weit in den Wirbelraum hineinragt. Ein derart von seinem Umfang her kleinbauender Verteiler kann mit dem zuführenden Wirbelrohr auf eine kompakte Höhe gebracht werden, in dem der Verteiler mit Wirbelrohr und Rohrbogen eine Länge bzw. im montierten Zustand eine Höhe von 45 cm nicht übersteigend ausgebildet ist. Damit wird die weiter vorne schon erwähnte vorteilhafte kurze Bauweise sichergestellt, bei der auch Säschienen mit mehreren Verteilern problemlos gehandhabt werden können, weil die Verteiler beim Einklappen nicht zusammenstoßen bzw. kollidieren können.

Nicht nur eine einfachere Montage, sondern gleichzeitig auch die erwünschte geringe Bauhöhe wird weiter dadurch sichergestellt, das Wirbelrohr und Verteilergehäuse zusammen eine Einheit bildend einteilig ausgebildet sind. Damit ist eine günstige Bauform und Bauhöhe erreichbar, wobei wie erwähnt die Integrierung des Wirbelrohres und des Verteilers zu einer kompletten Baueinheit auch noch den Vorteil hat, dass damit die Montage erleichtert und beschleunigt wird.

Zur Sicherstellung einer gleichmäßigen Verwirbelung auf kurzem Wege sieht die Erfindung vor, dass das Wirbeirohr 3 - 5 Wirbelsegmente aufweist.

Die geringe Bauhöhe der Gesamteinheit wird weiter dadurch sichergestellt, dass im Rohrbogen an der Innenseite von dessen Außenbogen eine Verteilnase vorgesehen ist, die vorzugsweise als Rundprofil und in ihrer Lage veränderbar ausgebildet ist. Über die Verteilnase, wird der Saatgutstrom umgelenkt und vorverwirbelt. Die als Rundprofil ausgebildete Verteilnase fördert eine gleichmäßige Aufteilung des anströmenden Luft-/Saatgutgemisches, sodass sichergestellt ist, dass in den Bereich des Wirbelrohres bereits "vorverwirbelte" Mengen einströmen, um hier optimal verwirbelt zu werden.

Gerade bei langen Zuführrohren zentriert sich das Saatgut leicht im Luftstrom und kann dann im vorgeordneten Rohrbogen und im Wirbelrohr nur unzureichend verwirbelt und verteilt werden. Um die durch eine ungenügende Verteilgenauigkeit eintretenden spürbaren Ertragseinbußen zu verhindern, sieht die Erfindung insbesondere bei solchen längeren Zuleitungen vor, dass im Abstand zum Rohrbogen im Zuführrohr ein oder im Abstand mehrere Wirbeleinsätze mit Wirbelsegmenten angeordnet sind. Dadurch wird das Saatgut bereits vorverwirbelt und der Einsatz eines kurzen Wirbelrohres möglich. Vorteilhaft ist außerdem, dass durch diese besondere Bauweise eine Erhöhung der Luftleistung des Gebläses auch bei längeren Leitungen, z. B. bei dem Einsatz mit Fronttank nicht notwendig ist.

Eine weitere zweckmäßige Ausbildung sieht vor, dass die von den Verteilern zu den Säscharen bzw. Saatgutausläufen führenden Schlauchleitungen eine annähernd gleiche Länge und einen annähernd gleichen Durchmesser aufweisen. Dadurch werden gleiche Druckverhältnisse in allen Schlauchleitungen sichergestellt, sodass ein nachteilhafter Einfluß auf die Verteilgenauigkeit nicht eintreten kann. Dabei kann es zweckmäßig sein, bei einklappbar ausgebildeten Säschienen oder Säeinheiten, je Teil- einheit ein oder mehrere Verteiler vorzusehen. Dadurch können die Leitungen vom Verteiler zu den Säscharen kurz gehalten werden, was zusätzlich den Vorteil hat, dass kleinere und damit kostengünstigere Gebläse eingesetzt werden können.

Die Erfindung zeichnet sich insbesondere dadurch aus, dass eine Drillmaschine geschaffen ist, bei der der Verteiler eine geringe Bauhöhe aufweist und auch von den Entstehungskosten her sehr günstig ist. Verteiler und vorgeordnetes Wirbeirohr bilden eine Baueinheit, wobei der Verteiler einen kegelförmigen Führungskörper besitzt, der mit seiner Spitze bis an den Wirbelraum des Wirbelrohres heranreicht, sodass eine vorteilhafte Verteilung des Saatgutstromes zu den einzelnen Auslässen gewährleistet ist. Eine schonende Behandlung bzw. Führung der einzelnen Körner ist durch diese Ausbildung sichergestellt. Aufgrund der geringen Bauhöhe der gesamten Verteilereinheit kann eine derartige Drillmaschine mit einklappbaren Säschienen ausgerüstet werden, ohne dass beim Einklappen der Säschienen irgendwelche Probleme auftreten.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu not-wendigen. Einzelheiten und Einzelteilen dargestellt ist.
Es zeigen:
- Fig. 1: eine Drillmaschine in Seitenansicht,
- Fig. 2: eine Draufsicht auf den Verteiler und
- Fig. 3: einen Längsschnitt durch die Verteiler/Wirbelrohreinheit.

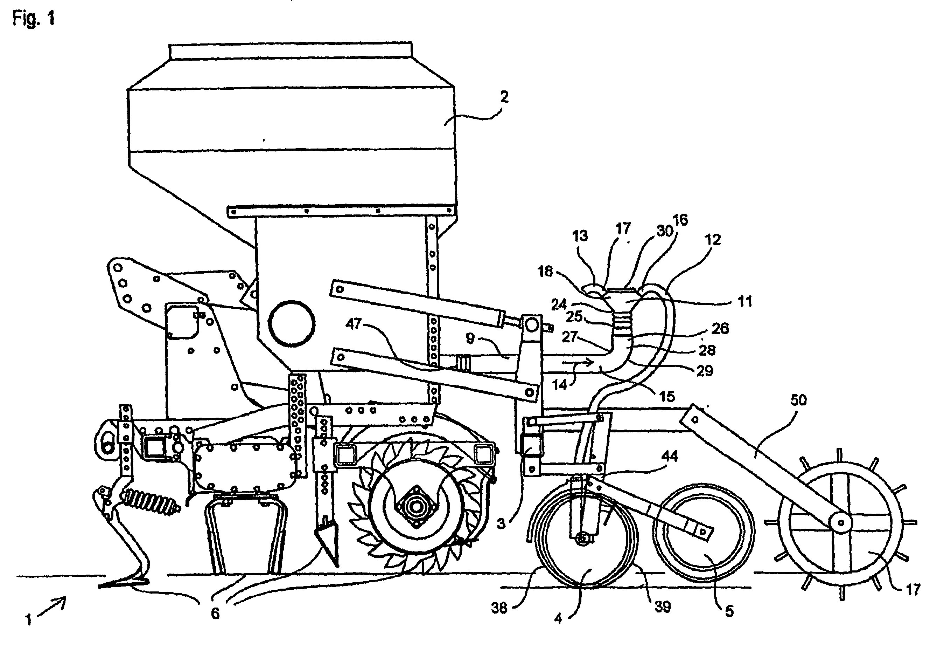

Fig. 1 zeigt eine auf eine Kreiselegge 6 aufgebaute pneumatische Drillmaschine 1 mit Säschiene 3 in Seitenansicht. Die Säschiene 3 ist mit mehreren Säscharen bzw. Doppelscheibensäscharen 4 und nachgeordneten Druckrollen 5 bestückt. Die nicht dargestellte Säwelle wird durch das Spomrad 7 angetrieben.

Das aus dem Saatgutbehälter 2 geförderte Saatgut wird über das Zuführrohr 9 und den Rohrbogen 15 den einzelnen, mit einem vorgeordneten Wirbelrohr 10 ausgerüsteten Verteuern 11 zugeführt. Von hier aus gelangen die einzelnen Saatgutkörner über die Schlauchleitungen 12, 13 zu den einzelnen Säscharen 4. Die Fließrichtung ist mit 14 bezeichnet.

Dem Verteilergehäuse 18 vorgeordnet ist das Wirbelrohr 10, das dafür sorgt, dass das Saatgutgemisch verwirbelt wird, um so vom Verteiler 11 gleichmäßig verteilt zu werden. Wirbelrohr 10 und Zuführrohr 9 sind über einen Rohrbogen 15 miteinander verbunden.

Das Wirbelrohr 10 ist mit einer Vielzahl, hier mit vier Wirbelsegmenten 24, 25 ausgerüstet. Erkennbar ist, dass der Deckel 30 auf der Innenseite 54 einen "kegelförmigen" Führungskörper 31 aufweist, dessen Spitze 32 den Übergangsbereich 33 zwischen Verteiler 11 und Wirbelrohr 10 überbrückt. Die Spitze 32 ragt bis in den Wirbelraum 36 hinein.

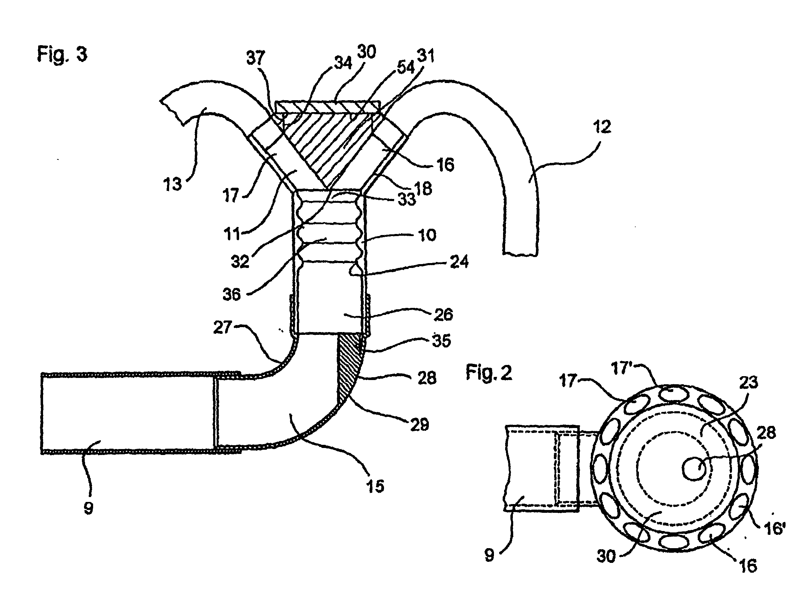

Der Deckel 30 verfügt über ein Gewinde 34, das mit den Innengewinde 37 des Verteilergehäuses 18 korrespondierend ausgebildet, sodass der gesamte Deckel 30 leicht und genau in die aus Fig. 3 ersichtliche Position eingeschraubt werden kann. Das Gewinde 34, 37 ist im oberen Bereich nur angedeutet wiedergegeben.

Die auf der Innenseite 35 des Außenbogens 29 des Rohrbogens 15 vorgesehene Verteilnase 28 verwirbelt das Saatgutgemisch vor, d. h. bevor es in das Wirbelrohr 10 eintritt. Somit kommt es zusammen mit dem Wirbelrohr 10 zu einer abschließenden Verwirbelung und Verteilung des Saatgutstromes vor Eintritt in den Verteiler 11. Die Verteilnase 27 liegt gegenüber der Bogeninnenseite 27 im Übergangsbereich 26 zum Wirbelrohr 10.

Einer Verteilungenauigkeit wird vorgebeugt, indem in dem Zuführrohr 9 weitere Wirbeleinsätze 47 vorgesehen sind. Bereits vor dem eigentlichen Wirbelrohr 10 wird hier das Saatgut vorteilhaft vorverwirbelt. Eine erstklassige Verteilgenauigkeit wird dadurch erzielt, ohne dass an den Verteiler 11 angrenzende Wirbelrohr 10 unnötig lang auszuführen und ohne die Luftleistung des Gebläses durch Vorsehen leistungsstärkere Gebläse erhöhen zu müssen.

Nach der in Fig. 2 angedeuteten Ausführung des Verteilers 11 sind diesem insgesamt 12 Ausläufe 16, 16', 17, 17' zugeordnet. An diese Ausläufe 16, 17 schließen sich die Schlauchleitungen 12, 13 an, über die die einzelnen Säschare 4 mit den Saatgutkörnern versorgt werden. Angedeutet ist in Fig. 2 ergänzend die Position der Verteilnase 28, die auf der Innenseite 35 des Außenbogens 29 entsprechend aufragend angeordnet ist. Eine optimierte Vorverwirbelung des anströmenden Saatgutes ist so sichergestellt.

Der insbesondere in Fig. 3 wiedergegebene Verteiler 11 ist vorzugsweise aus Kunststoff hergestellt und damit korrisionsbeständig und praktisch wartungsfrei. Der Verteiler 11 ist rund ausgebildet und kann daher als einfaches Drehteil bzw. Gußteil preisgünstig hergestellt werden. Der Deckel 30 des Verteilers 11 ist ebenfalls ein einfaches Drehteil, was kostengünstige Vorteile mit sich bringt und auch eine genaue Herstellung ermöglicht. Die besondere Konstruktion läßt einen kleinen Verteiler 11 zu, der im Durchmesser kleiner als 18 cm, vorzugsweise 15 cm ist, während die gesamte Einheit aus Wirbelrohr 10 und Verteiler 11 von der Höhe vorzugsweise 45 cm misst.

Bei Fig. 1 ist das Wirbelrohr 10 im vorderen Teil nur angedeutet, im hinteren, dem Verteiler 11 zugewandten Teil auch in Einzelheiten, insbesonere dem Verteiler 11 betreffend wiedergegeben. Mit 8 ist die Fahrtrichtung angedeutet, in der die gesamte Drillmaschine 1 eingesetzt wird.

## Patentansprüche

1. Pneumatische Drillmaschine (1) oder Sämaschine mit zwischen Zuführrohr (9), Rohrbogen (15), Wirbelrohr (10) und den zu verteilt angeordneten Säscharen (4) führenden Schlauchleitungen (12, 13) oder Rohrleitungen vorgesehenem Verteiler (11), dessen Verteilergehäuse (18) über sechs oder mehr Ausläufe (16, 17) verfügt,
**dadurch gekennzeichnet,**
**dass** der Verteiler (11) einen kegelförmigen Führungskörper (31) aufweist, der mit einer an das Wirbelrohr (10) heranreichenden Spitze (32) ausgerüstet und Teil eines Deckels (30) ist, der mit einem Gewinde (34) versehen ist, das mit dem Innengewinde (37) des Verteilergehäuses (18) korrespondierend ausgebildet ist, wobei das Wirbelrohr (10) vertikal angeordnet ist und sinusförmige, quer zur Fließrichtung (14) verlaufende, dicht aufeinander folgend angeordnete Wirbelsegmente (24, 25) aufweist.

2. Drillmaschine nach Anspruch 1,
**dadurch gekennzeichnet,**
**dass** der Deckel (30) als Rotations- oder Drehteil und auch das Verteilergehäuse (18) im Querschnitt rund und in der Höhe trichterförmig ausgebildet und vorzugsweise aus Kunststoff hergestellt sind.

3. Drillmaschine nach Anspruch 1,
**dadurch gekennzeichnet,**
**dass** die Spitze (32) des kegelförmigen Führungskörpers (31) in den Wirbelraum (36) des Wirbelrohrs (10) hineinreichend ausgebildet ist.

4. Drillmaschine nach einem der vorhergehenden Ansprüche,
**dadurch gekennzeichnet,**
**dass** der Verteiler (11) einen Außendurchmesser von nicht mehr als 18 cm bei 6 - 12 Ausläufen (16, 17), vorzugsweise 15 cm aufweist.

5. Drillmaschine nach einem der vorhergehenden Ansprüche,
**dadurch gekennzeichnet,**
**dass** der Verteiler (11) mit Wirbelrohr (10) und Rohrbogen (15) eine Länge bzw. im montierten Zustand eine Höhe von 45 cm nicht übersteigend ausgebildet ist.

6. Drillmaschine nach einem der vorhergehenden Ansprüche,
**dadurch gekennzeichnet,**
**dass** Wirbelrohr (10) und Verteilergehäuse (18) einteilig ausgebildet sind.

7. Drillmaschine nach einem der vorhergehenden Ansprüche,
**dadurch gekennzeichnet,**
**dass** das Wirbelrohr (10) drei bis fünf Wirbelsegmente (24, 25) aufweist.

8. Drillmaschine nach einem der vorhergehenden Ansprüche,
**dadurch gekennzeichnet,**
**dass** im Rohrbogen (15) an der Innenseite (35) von dessen Außenbogen (29) eine Verteilnase (28) vorgesehen ist, die vorzugsweise als Rundprofil ausgebildet ist.

9. Drillmaschine nach einem der vorhergehenden Ansprüche,
**dadurch gekennzeichnet,**
**dass** im Abstand zum Rohrbogen (15) im Zuführrohr (9) ein oder im Abstand mehrerer Wirbeleinsätze (47) mit Wirbelsegmenten angeordnet sind.

10. Drillmaschine nach einem der vorhergehenden Ansprüche,
**dadurch gekennzeichnet,**
**dass** die von den Verteuern (11) zu den Säscharen (4) führenden Schlauchleitungen (12, 13) eine annähernd gleiche Länge und einen annähernd gleichen Durchmesser aufweisen.

## Claims

1. Pneumatic seed drill (1) or sowing machine comprising a distributor (11) provided between the supply pipe (9), pipe bend (15), vortex pipe (10) and the hoses (12, 13) or pipelines leading to the shares (4) arranged in a distributed manner, the housing (18) of the distributor (11) having six or more outlets (16, 17),
**characterised in that**
the distributor (11) has a conical guide body (31), equipped with a tip (32) reaching to the vortex pipe (10) which is a part of the cover (30), which is provided with a thread (34) which is designed to correspond with the internal thread (37) of the distributor housing (18), the vortex (10) being arranged vertically and having sinusoidal vortex segments (24, 25) arranged close together and consecutively and extending transversely to the flow direction (14).

2. Seed drill according to claim 1,
**characterised in that**
the cover (30) is produced as a rotary part and the distributor housing (18) is also round in cross-section and funnel-shaped over the height and they are preferably produced from plastics material.

3. Seed drill according to claim 1,
**characterised in that**
the tip (32) of the conical guide body (31) is designed to extend in to the vortex space (36) of the vortex pipe (10).

4. Seed drill according to any one of the preceding claims,
**characterised in that**
the distributor (11) has an external diameter of not more than 18 cm with 6 to 12 outlets (16, 17) preferably 15 cm.

5. Seed drill according to any one of the preceding claims,
**characterised in that**
distributor (11) with the vortex pipe (10) and pipe bend (15) is designed to not exceed a length or, in the assembled state, a height of 45 cm.

6. Seed drill according to any one of the preceding claims,
**characterised in that**
the vortex pipe (10) and distributor housing (18) are designed in one piece.

7. Seed drill according to any one of the preceding claims,
**characterised in that**
the vortex pipe (10) has three to five vortex segments (24, 25).

8. Seed drill according to any one of the preceding claims,
**characterised in that**
a distributor nose (28) is provided in the pipe bend (15) on the inside (35) of the outer bend (29) thereof, the distributor nose preferably being designed as a round profile.

9. Seed drill according to any one of the preceding claims,
**characterised in that**
a vortex insert or a plurality of spaced vortex inserts (47) with vortex segments are arranged spaced from the pipe bend (15) in the supply pipe (9).

10. Seed drill according to any of the preceding claims,
**characterised in that**
the hoses (12, 13) leading from the distributors (11) to the shares (4) have an approximately equal length and an approximately equal diameter.

## Revendications

1. Semoir pneumatique (1) ou machine à semer avec distributeur (11) prévu entre la conduite d'alimentation (9), le coude (15), le tube de tourbillonnement (10) et les conduites flexibles (12, 13) ou tubes menant à des socs d'ensemencement (4) répartis, distributeur dont le corps (18) dispose de six embouchures (16, 17) ou plus,
**charactérisé en ce que**
le distributeur (11) comporte un corps de guidage (31) conique équipé d'une pointe (32) arrivant jusqu'au tube tourbillonnement (10), représente la partie d'un couvercle (30) doté d'un filetage (34) configuré en correspondance avec le filetage intérieure (37) du corps du distributeur (18), ce tube de tourbillonnement (10) étant disposé à la verticale et comportant des segments de tourbillonnement (24, 25) sinusoidaux disposés transversalement au sens d'écoulement (14) et se succédant étriotement.

2. Semoir selon de la revendication 1,
**charactérisé en ce que**
le couvercle (30) est configuré comme élément de révolution ou de pièce à tourner, le corps du distributeur (18) étant configuré avec une section ronde et an forme d'entonnoir en son hauteur, ces deux éléments étant préférentiellement fabriqué en matière synthétique.

3. Semoir selon la revendication 1,
**charactérisé en ce que**
la pointe (32) du corps de guidage (31) conique en configuré pour arriver à l'intérieur de l'espace de tourbillonnement (36) du tube de tourbillonnement (10).

4. Semoir selon l'une quelconque des revendications précédentes,
**charactérisé en ce que**
le distributeur (11) a un diamètre de 18 cm au maximum pour 6 - 12 embouchures (16, 17) et préférentiellement de 15 cm.

5. Semoir selon l'une quelconque des revendications précédentes,
**charactérisé en ce que**
le distributeur (11) avec tube de tourbillonnement (10) et coude (15) a une longueur, soit une hauteur à l'état monté, de 45 cm au maximum.

6. Semoir selon l'une quelconque des revendications précédentes, charactérisé en ce que
le tube de tourbillonnement (10) et le corps du distributeur (18) sont configurés en une seule pièce.

7. Semoir selon l'une quelconque des revendications précédentes, charactérisé en ce que
le tube de tourbillonnement comporte trois à cinq segments de tourbillonnement (24, 25).

8. Semoir selon l'une quelconque des revendications précédentes, charactérisé en ce qu'un
nez de distribution (28) est prévu dans le coude (15), sur le côte intérieur (35) de sa courbure extérieure (29), nez configuré préférentiellement comme profil rond.

9. Semoir selon l'une quelconque des revendications précédentes,
**charactérisé en ce qu'un**
élément ou des éléments de tourbillonnement (47) avec segments de tourbillonnement sont disposés dans la conduite d'alimentation (9) à distance par rapport au coude (5) ou à plusieurs.

10. Semoir selon l'une quelconque des revendications précédentes,
**charactérisé en ce que**
les conduites flexibles (12, 13) reliant les distributeurs (11) aux socs d'ensemencement (4) ont approximativement la méme longueur et le méme diamètre.
